(19) Europäisches Patentamt
European Patent Office
Office européen des brevets

(11) Publication number: 0 263 237 A2

(12) # EUROPEAN PATENT APPLICATION

(21) Application number: 87107294.8

(51) Int. Cl.4: C08G 59/14 , C08G 59/17

(22) Date of filing: 19.05.87

(30) Priority: 09.10.86 JP 239162/86

(43) Date of publication of application: 13.04.88 Bulletin 88/15

(84) Designated Contracting States: DE FR GB IT

(71) Applicant: DAINIPPON INK AND CHEMICALS, INC.
35-58, Sakashita 3-chome
Itabashi-ku, Tokyo 174(JP)

(72) Inventor: Ehara, Shunji
4-4, Tatsumidai Higashi
Ichihara-shi Chiba-ken(JP)
Inventor: Nakamura, Shuji
4-4, Tatsumidai Higashi
Ichihara-shi Chiba-ken(JP)
Inventor: Moriyama, Hiroshi
4-4, Tatsumidai Higashi
Ichihara-shi Chiba-ken(JP)

(74) Representative: Kraus, Walter, Dr. et al
Patentanwälte Kraus, Weisert & Partner
Thomas-Wimmer-Ring 15
D-8000 München 22(DE)

(54) **Thermosetting epoxy resin composition.**

(57) A thermosetting epoxy resin composition consisting essentially of (A) a silicone-modified epoxy resin which is the reaction product of (a) an epoxy resin having a radical-polymerizable double bond in the molecule obtained by reacting some of the epoxy groups of a polyfunctional epoxy resin with acrylic acid and/or methacrylic acid, with (b) an organic silicone compound having a radical-reactive double bond in the molecule, and (B) a curing agent. An electronic component part encapsulated with the above resin is also provided.

EP 0 263 237 A2

Xerox Copy Centre

## Thermosetting epoxy resin Composition

This invention relates to a thermosetting epoxy resin composition which is suitable for encapsulating electronic component parts such as semiconductors and gives a cured product having excellent thermal resistance, moisture resistance and cracking resistance and little internal stresses, and to an electronic component part encapsulated with this resin composition.

It is known that epoxy resins have been the most used encapsulating material for semiconductors such as IC and LSI and other electronic component parts. However, with the increase of integration and the size reduction of electronic component parts in recent years, there has been an increased demand for an encapsulaing resin having a well balanced combination of thermal resistance, moisture resistance, cracking resistance, etc.

Novolak-type epoxy resins are generally used as a resin having thermal resistance and moisture resistance. But they have the defect that because of their high modulus of elasticity, they are brittle and susceptible to cracking by thermal shock, and internal stresses generated therein on curing shrinkage or in heat cycles cause damage to elements to be encapsulated with them.

To improve cracking resistance and reduce internal stresses, it is effective to improve hardness and brittleness by lowering the modulus of the resin. For this purpose attempts have been made to introduce a flexible structure into the skeleton of the resin or to use a flexible resin and an additive together. However, these attempts have not resulted in resins which have satisfactory thermal resistance and/or moisture resistance.

With a view to improving cracking resistance and reducing internal stresses by reducing the modulus of elasticity without deteriorating thermal resistance, many attempts have been made to use resins having a sea-island structure (islands of a silicone compound are dispersed in the sea of an epoxy resin) obtained by blending the epoxy resin with a silicone oil, a semi-solid silicone rubber or a modification product thereof, or reacting a silicone compound having a functional group such as a carboxyl or amino group with the epoxy resin.

It is difficult by such methods to disperse the silicone compound uniformly and finely. Even when it is finely dispersed mechanically, heating tends to cause separation of the silicone compound. Hence, nonuniformity occurs in the product and its moisture resistance is reduced.

It is an object of this invention to solve the above problem of the prior art.

The present inventors have found that this object can be achieved by an epoxy resin (A) obtained by reacting (a) an epoxy resin having a radical-reactive double bond in the molecule obtained by reacting some of the epoxy groups of a polyfunctional epoxy resin with acrylic acid and/or methacrylic acid [to be referred to as the polymerizable epoxy resin (a)], with (b) an organic silicone compound having a radical-reactive double bond in the molecule [to be referred to as the polymerizable silicone compound (b)] in the presence of a radical polymerization initiator.

Thus, according to this invention, there is provided a thermosetting epoxy resin composition comprising (A) the above silicone-modified epoxy resin and (B) a curing agent as essential components, and an electronic component part encapsulated with this resin composition. This resin composition is suitable for encapsulating electronic component parts such as semiconductors, and gives a cured product having excellent thermal resistance, moisture resistance and cracking resistance and little internal stress.

The polyfunctional epoxy resin used in this invention is difunctional or higher. Its epoxy equivalent is not particularly limited. Usually, it has an epoxy equivalent of not more than 1,000, preferably 100 to 500. Specific examples of the polyfunctional epoxy resin are epoxy resins of the bisphenol A type, the bisphenol F type, the phenol novolak type and the cresol novolak type, and resins obtained by introducing halogen atoms such as Br and Cl into these epoxy resins. In view of thermal resistance, novolak-type epoxy resins are preferred.

The polymerizable epoxy resin (a) can be easily obtained by reacting the polyfunctional epoxy resin with acrylic acid and/or methacrylic acid under heat in the presence of a catalyst such as a tertiary amine, a quaternary ammonium salt, a trialkylphosphine or a quaternary phosphonium salt. The equivalent ratio of the epoxy groups of the polyfunctional epoxy resin to the carboxyl group of acrylic acid and/or methacrylic acid is usually 1:0.01-0.5, above all 1:0.05-0.2 Equivalent ratios of 1:0.05-0.2 are preferred because grafting of the resin (a) to the polymerizable silicone compound (b) is effected fully and gellation during the reaction can be prevented.

The polymerizable silicone compound (b) may be any organic silicone compound having a radical-reactive double bond in the molecule. Examples are silicone acrylate and vinyl-modified silicones. The silicone acrylate is especially preferred because it has excellent reactivity, has a high ratio of grafting to the polymerizable epoxy resin (a), and the unreacted monomer does not appreciably remain. Silcone acrylates having a molecular weight of 300 to 10,000 and one or two radical reactive double bonds in the molecule, either singly or as a mixture, are especially preferred. If required, an organic silicone compound having no radical reactive double bond in the molecule or an organic silicone compound having at least three radical-reactive double bonds in the molecule may be used in combination with the above organic silicone compound. In this case, to prevent gellation during reaction with the polymerizable epoxy resin (a), the number of radical-reactive double bonds per molecule in the silicone acrylate mixture is preferably less than 2.0, above all 0.5 to 1.7.

The silicone-modified epoxy resin (A) is obtained by reacting the polymerizable epoxy resin (a) with the polymerizable silicone compound (b) in the presence of a radical polymerization initiator. This radical reaction easily takes place by the addition of a known radical polymerization initiator, for example peroxides such as hydroperoxides and peroxy esters, and azoisobutyronitrile.

In the radical reaction, the polymerizable silicone compound (b) attains a high molecular weight, and also reacts with the double bonds of the polymerizable epoxy resin (a). Hence, the resulting silicone-modified epoxy resin (A) does not undergo separation between the silicone component and the epoxy component. The silicone component phase is dispersed finely in the epoxy resin phase, and the two phases have good adhesion to each other. As a result, an ideal sea-island structure is created, and the modulus of elasticity of the epoxy resin can be lowered without impairing its thermal resistance. In addition, heating does not at all induce separation of the silicone compound, and the reduction of moisture resistance can be prevented.

The amount of the polymerizable organic silicone compound (b) used is usually 5 to 100 parts by weight, preferably 10 to 60 parts by weight, per 100 parts by weight of the polymerizable epoxy resin (a). There is no particular limitation on the epoxy equivalent of the silicone-modified epoxy resin (A) obtained by reacting the compounds (a) and (b). Preferably, it is 100 to 2,000, especially preferably 100 to 800.

The curing agent (B) may be any of conventional curing agents which include, for example, acid anhydride-type curing agents such as phthalic anhydride, tetrahydrophthalic anhydride, trimellitic anhydride and pyromellitic anhydride, amine-type curing agents such as dicyandiamide, diaminodiphenylmethane, diaminodiphenylsulfone and metaphenylenediamine, and novolak-type curing agents such as phenol-novolak resin. The novolak-type curing agents are preferred when the composition of the invention is used to encapsulate electronic component parts.

As required, the composition of the invention may contain various additives such as a curing accelerator, a filler and a coloring agent.

The following Referential Examples, Examples and Comparative Examples illustrate the present invention more specifically. In these examples, all parts are by weight.

## REFERENTIAL EXAMPLE 1

Production of a silicone-modified epoxy resin:-

Four parts of methacrylic acid was added to 96 parts of a cresol novolak-type epoxy resin ("Epiclon N-665" having an epoxy equivalent of 210, produced by Dainippon Ink and Chemicals, Inc.). As a catalyst, 0.03 part of triphenylphosphine was added, and the mixture was maintained at 120°C for 2 hours to obtain a polymerizable epoxy resin ($a_1$).

Then, 25 parts of a polymerizable silicone compound ($b_1$) having the following formula

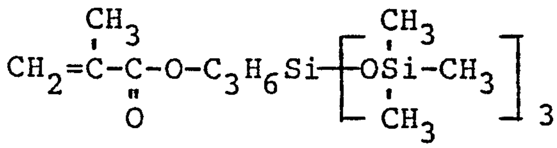

was added to 100 parts of the polymerizable epoxy resin ($a_1$). Furthermore, 0.1 part of "Perbutyl Z" (tert-butyl peroxybenzoate produced by Nippon Oils and Fats Co., Ltd.) was added, and the mixture was

maintained at 120°C for 3 hours to obtain a silicone-modified epoxy resin ($A_1$) having an epoxy equivalent of 307.

When the silicone-modified epoxy resin ($A_1$) was heated to 150°C and left to stand for 30 minutes, no separation occurred between the silicone compound and the epoxy resin.

REFERENTIAL EXAMPLE 2

Production of a silicone-modified epoxy resin:-

Three parts of methacrylic acid was added to 97 parts of "Epiclon N-665", and 0.03 part of triphenylphosphine was added. The mixture was maintained at 120°C for 2 hours to obtain a polymerizable epoxy resin ($a_2$).

To 100 parts of the polymerizable epoxy resin ($a_2$) were added 15 parts of a polymerizable silicone compound ($b_2$) having the following formula

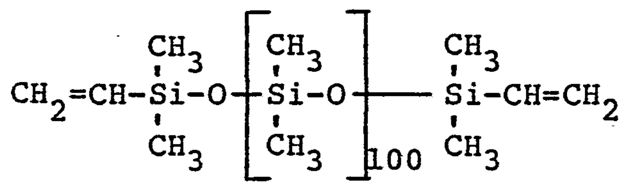

10 parts of a polymerizable silicone compound ($b_3$) having the following formula

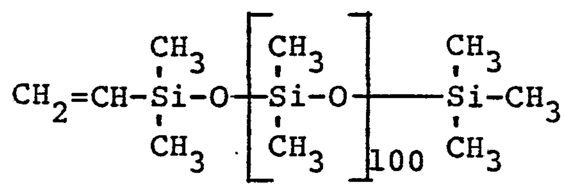

and 0.1 part of "Perbutyl Z". The mixture was maintained at 130°C for 3 hours to obtain a silicone-modified epoxy resin ($A_2$) having an epoxy equivalent of 295.

When the silicone-modified epoxy resin ($A_2$) was heated to 150°C and then left to stand for 30 minutes, no separation occurred between the silicone compound and the epoxy resin.

REFERENTIAL EXAMPLE 3

Production of a silicone-modified epoxy resin:-

Three parts of acrylic acid was added to 97 parts of tetrabromobisphenol A-type epoxy resin ("Epiclon 152" having an epoxy equivalent of 370, produced by Dainippon Ink and Chemicals, Inc.), and 0.03 part of triphenylphosphine was added as a catalyst. The mixture was maintained at 120°C for 2 hours to obtain a polymerizable epoxy resin ($a_3$).

To 100 parts of the polymerizable epoxy resin ($a_3$) were added 30 parts of a polymerizable silicone compound ($b_4$) having the following formula

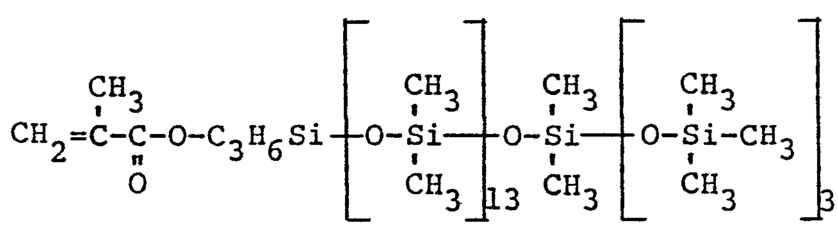

and 0.l part of "Perbutyl", and the mixture was maintained at l20°C for 3 hours to give a silicone-modified epoxy resin ($A_3$) having an epoxy equivalent of 600.

When the silicone-modified epoxy resin ($A_3$) was heated to l50°C and left to stand for 30 minutes, no separation occurred between the silicone compound and the epoxy resin

REFERENTIAL EXAMPLE 4

Production of a silicone-modified epoxy resin:-

A silicone-modified epoxy resin ($A_4$) having an epoxy equivalent of 282 was produced in the same way as in Referential Example l except that the amount of the polymerizable silicone compound ($b_1$) was changed to l5 parts.

When the silicone-modified epoxy resin ($A_4$) was heated to l50°C and left to stand for 30 minutes, no separation occurred between the silicone compound and the epoxy resin.

REFERENTIAL EXAMPLE 5

Production of a silicone-modified epoxy resin:-

A silicone-modified epoxy resin ($A_5$) having an epoxy equivalent of 380 was produced in the same way as in Referential Example l except that the amount of the polymerizable silicone compound ($b_1$) was changed to 50 parts.

When the silicone-modified epoxy resin ($A_5$) was heated to l50°C and left to stand for 30 minutes, no separation occurred between the silicone compound and the epoxy resin.

REFERENTIAL EXAMPLE 6

Production of a silicone-modified epoxy resin:-

Twenty parts of a silicone compound ($b_1'$) having a molecular weight of 30,000 and the following formula

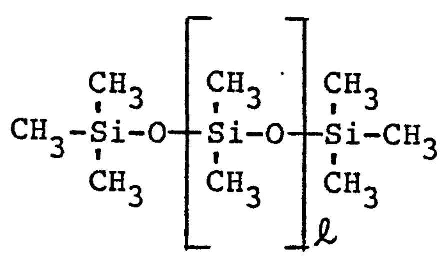

was added to l00 parts of "Epiclon N-665", and the mixture was stirred vigorously at l30°C for one hour to give a silicone-modified epoxy resin ($A_1'$) having an epoxy equivalent of 255.

When the silicone-modified epoxy resin ($A_1'$) was heated to l50°C and left to stand for 30 minutes, complete separation occurred between the silicone compound and the epoxy resin.

REFERENTIAL EXAMPLE 7

Production of a silicone-modified epoxy resin:-

Twenty parts of a silicone compound ($b_2'$) having a molecular weight of 30,000 and a carboxyl group equivalent of 40,000 and the following formula

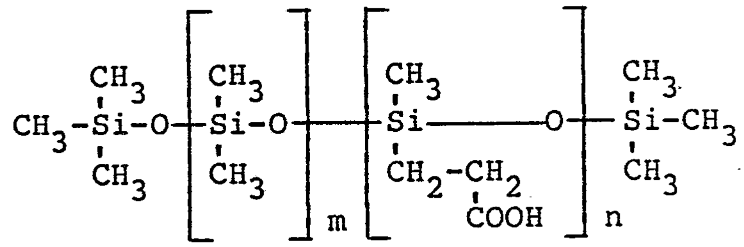

was added to 100 parts of "Epiclon N-665", and 0.05 part of triphenylphospine was further added. The mixture was maintained at 130°C for 5 hours to give a silicone-modified epoxy resin ($A_2'$) having an epoxy equivalent of 260.

When the silicone-modified epoxy resin ($A_2'$) was heated to 150°C and left to stand for 30 minutes, complete separation occurred between the silicone compound and the epoxy resin.

## EXAMPLES 1-5 AND COMPARATIVE EXAMPLES 1-7

In each run, the materials indicated in Table 1 were mixed and kneaded in accordance with the recipe shown in Table 1. The mixture was pulverized to give a thermosetting epoxy resin composition.

The resin composition was cured at a mold temperature of 175°C and a mold pressure of 50 kg/cm$^2$ for a curing period of 3 minutes, and then post-cured at 170°C for 3 hour to obtain a flat plate-like cured product having a thickness of 3 mm. The glass transition temperature, flexural modulus and water absorption (pressure cooker test; conditions: 133°C, 100% RH, 100 hours) of the cured product were measured. A DIP-type 16 pin mold IC encapsulated with the resin composition was subjected to a heat cycle test through 300 cycles each cycle consisted of cooling at -55°C for 30 minutes and heating at 150°C for 30 minutes. After the testing, the state of occurrence of cracks was visually observed and its cracking resistance was rated on a scale of ⊚, ○, Δ and X. Furthermoe, a piezo resistance element was set on the frame of the DIP-type 16 pin IC and encapsulated with the resin composition, and then the stress (internal stress) on the element was measured.

The results obtained are shown in Table 1.

Notes (*1) to (*4) in Table 1 were as follows:-

(*1) Epiclon 1600 is a tradename for a dimeric acid-modified flexible epoxy resin having an epoxy equivalent of 700 produced by Dainippon Ink and Chemicals, Inc.

(*2) Epiclon 707 is a tradename for a polyalkylene glycol-type flexible epoxy resin having an epoxy equivalent of 320 produced by Dainippon Ink and Chemicals, Inc.

(*3) Varcum TD2131 is a tradename for a phenolnovolak resin having a softening point of 80°C produced by Dainippon Ink and Chemicals, Inc.

(*4) Curesol $C_{11}Z$ is a tradename for an imidazole-type curing accelerator produced by Shikoku Chemical Co., Ltd.

Table 1

| Items | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|
| Mixing recipe (parts) | Silicone-modified epoxy resin ($A_1$) | 100 | – | – | – | – | – | – | – | – | – | – | – |
| | " ($A_2$) | – | 100 | – | – | – | – | – | – | – | – | – | – |
| | " ($A_3$) | – | – | 100 | – | – | – | – | – | – | – | – | – |
| | " ($A_4$) | – | – | – | 100 | – | – | – | – | – | – | – | – |
| | " ($A_5$) | – | – | – | – | 100 | – | – | – | – | – | – | – |
| | " ($A_1'$) | – | – | – | – | – | – | – | – | – | – | 100 | – |
| | " ($A_2'$) | – | – | – | – | – | – | – | – | – | – | – | 100 |
| | Epiclon N-665 | – | – | – | – | – | 100 | 80 | 85 | – | – | – | – |
| | Epiclon 152 | – | – | – | – | – | – | – | – | 100 | 80 | – | – |
| | Epiclon 1600 (*1) | – | – | – | – | – | – | 20 | – | – | 20 | – | – |
| | Epiclon 707 (*2) | – | – | – | – | – | – | – | 15 | – | – | – | – |
| | Varcum TD2131 (*3) | 33 | 35 | 17 | 36 | 27 | 49 | 42 | 46 | 28 | 25 | 40 | 39 |
| | Curesol $C_{11}Z$ (*4) | 1 | 1 | 1 | 1 | 1 | 1 | 1 | 1 | 1 | 1 | 1 | 1 |
| | Quartz powder | 310 | 315 | 273 | 317 | 296 | 348 | 331 | 341 | 299 | 292 | 327 | 324 |
| | Carnauba wax | 2 | 2 | 2 | 2 | 2 | 2 | 2 | 2 | 2 | 2 | 2 | 2 |
| | Carbon black | 2 | 2 | 2 | 2 | 2 | 2 | 2 | 2 | 2 | 2 | 2 | 2 |

– to be continued –

Table 1 (continued)

| Items | | Example | | | | | Comparative Example | | | | | | |
|---|---|---|---|---|---|---|---|---|---|---|---|---|---|
| | | 1 | 2 | 3 | 4 | 5 | 1 | 2 | 3 | 4 | 5 | 6 | 7 |
| Properties | Glass transition point (°C) | 169 | 168 | 147 | 170 | 162 | 168 | 128 | 124 | 148 | 115 | 164 | 166 |
| | Flexural modulus ($kg/mm^2$) | 850 | 840 | 830 | 870 | 730 | 1,290 | 1,110 | 1,080 | 1,160 | 980 | 990 | 950 |
| | Water absorption (%) | 0.85 | 0.95 | 0.87 | 0.83 | 0.94 | 0.93 | 0.99 | 1.13 | 0.91 | 1.10 | 1.05 | 0.97 |
| | Cracking resistance | ◎ | ◎-○ | ◎ | ◎ | ◎ | X | △ | △ | X | △ | ○-△ | ○ |
| | Internal stress ($kg/mm^2$) | 21 | 23 | 15 | 22 | 16 | 37 | 31 | 30 | 25 | 21 | 29 | 26 |

## Claims

I. A thermosetting epoxy resin composition consisting essentially of

(A) a silicone-modified epoxy resin which is the reaction product of (a) an epoxy resin having a radical-polymerizable double bond in the molecule obtained by reacting some of the epoxy groups of a polyfunctional epoxy resin with acrylic acid and/or methacrylic acid, with (b) an organic silicone compound having a radical-reactive double bond in the molecule, and

(B) a curing agent.

2. The composition of claim I wherein the polyfunctional epoxy resin has an epoxy equivalent of not more than I,000.

3. The composition of claim I wherein the polyfunctional epoxy resin is a novolak-type epoxy resin having an epoxy equivalent of I00 to 500.

4. The composition of claim I wherein the epoxy resin (a) is obtained by reacting the polyfunctional epoxy resin with acrylic acid and/or methacrylic acid in such proportions that the equivalent ratio of the epoxy groups in the polyfunctional epoxy resin to the carboxyl group in acrylic acid and/or methacrylic acid is from I:0.0I to I:0.5.

5. The composition of claim I wherein the epoxy resin (a) is obtained by reacting the polyfunctional epoxy resin with acrylic acid and/or methacrylic acid in such proportions that the equivalent ratio of the epoxy groups in the polyfunctional epoxy resin to the carboxyl group in acrylic acid and/or methacrylic acid is from I:0.05 to I:0.2.

6. The composition of claim I wherein the organic silicone compound (b) is silicone acrylate.

7. The composition of claim I wherein the organic silicon compound (b) is silicone acrylate having I or 2 radical-reactive double bonds in the molecule and a molecular weight of 300 to I0,000.

8. The composition of claim I wherein the organic silicone compound (b) is a silicone acrylate mixture containing silicone acrylates having I or 2 radical-reactive double bonds in the molecule and a molecular weight of 300 to I0,000 and having less than 2.0 radical-reactive double bonds on an average per molecule.

9. The composition of claim I wherein the organic silicone compound (b) is a silicone acrylate mixture containing silicone acrylates having I or 2 radical-reactive double bonds in the molecule and a molecular weight of 300 to I0,000 and having 0.5 to I.7 radical-reactive double bonds on an average per molecule.

I0. The composition of claim I wherein the silicone-modified epoxy resin (A) is obtained by reacting I00 parts by weight of the epoxy resin (a) and 5 to I00 parts by weight of the organic silicone compound (b) and has an epoxy equivalent of I00 to 2,000.

II. The composition of claim I wherein the silicone-modified epoxy resin (A) is obtained by reacting I00 parts by weight of the epoxy resin (a) and I0 to 60 parts by weight of the organic silicone compound (b) and has an epoxy equivalent of I00 to 800.

I2. The composition of claim I wherein the curing agent (B) is a novolak-type curing agent.

I3. An electronic component part encapsulated with a thermosetting epoxy resin composition, said composition consisting essentially of

(A) a silicone-modified epoxy resin which is the reaction product of (a) an epoxy resin having a radical-polymerizable double bond in the molecule obtained by reacting some of the epoxy groups of a polyfunctional epoxy resin with acrylic acid and/or methacrylic acid, with (b) an organic silicone compound having a radical-reactive double bond in the molecule, and

(B) a curing agent.

I4. The electronic component part of claim I3 wherein the polyfunctional epoxy resin is a novolak-type epoxy resin having an epoxy equivalent of I00 to 500.

I5. The electronic component part of claim I3 wherein the epoxy resin (a) is obtained by reacting the polyfunctional epoxy resin with acrylic acid and/or methacrylic acid in such proportions that the equivalent ratio of the epoxy groups in the polyfunctional epoxy resin to the carboxyl group in acrylic acid and/or methacrylic acid is from I:0.05 to I:0.2.

I6. The electronic component part of claim I3 wherein the organic silicone compound (b) is silicone acrylate having I or 2 radical-reactive double bonds in the molecule and a molecular weight of 300 to I0,000.

I7. The electronic component part of claim I3 wherein the organic silicone compound (b) is a silicone acrylate mixture containing silicone acrylates having I or 2 radical-reactive double bonds in the molecule and a molecular weight of 300 to I0,000 and having 0.5 to I.7 radical-reactive double bonds on an average per molecule.

I8. The electronic component part of claim I3 wherein the silicone-modified epoxy resin (A) is obtained by reacting I00 parts by weight of the epoxy resin (a) and I0 to 60 parts by weight of the organic silicone compound (b) and has an epoxy equivalent of I00 to 800.

I9. The electronic component part wherein the curing agent (B) is a novolak-type curing agent.